# EUROPEAN PATENT SPECIFICATION

(11) **EP 2 370 677 B1**
(45) Date of publication and mention of the grant of the patent: **22.03.2017**
(21) Application number: 09775235.6
(22) Date of filing: 09.12.2009
(51) Int. Cl.: F01N 3/02, F01N 3/037, F01N 3/04

(54) **METHOD AND ARRANGEMENT FOR REMOVING PARTICLES FROM EXHAUST GAS**
VERFAHREN UND ANORDNUNG ZUM ENTFERNEN VON PARTIKELN AUS ABGAS
PROCÉDÉ ET AGENCEMENT POUR LA SUPPRESSION DES PARTICULES DANS UN GAZ D'ÉCHAPPEMENT

(30) Priority: 22.12.2008 FI 20086232
(43) Date of publication of application: 05.10.2011
(73) Proprietor: Wärtsilä Finland Oy, 65380 Vaasa (FI)
(72) Inventor: RISTIMÄKI, Jyrki, FIN-65380 Vaasa (FI)
(74) Representative: Berggren Oy, Helsinki & Oulu
(86) International application number: PCT/FI2009/050991
(87) International publication number: WO 2010/072887

(56) References cited:
- WO-A1-99/56854
- WO-A1-2006/045488
- DE-A1- 19 515 352
- GB-A- 2 332 631
- US-A1- 2008 250 933

## Description

### Technical field

The present invention relates to a method for removing particles from exhaust gas, in which method an exhaust gas flow from an internal combustion engine is led to an exhaust gas particle cleaning device according to the preamble of claim 1. The present invention also relates to an arrangement for removing particles from exhaust gas according to claim 10.

### Background art

Exhaust gases are normally cleaned by catalyst devices, but the presently available catalyst devices do not remove particles. Exhaust gas particles, particularly in diesel engine exhaust gases, are generally smaller than 0.1 µm in size, typically below 0.2 µm. Particles of this size class are extremely difficult to remove because of the negligible mass of the particles. In the vehicle industry, particles of this size are removed by filters, whereby deposited particles are removed by burning them off the filter. However, if particles contain a high fraction of ash, as when burning heavy fuel oil, deposits cannot be removed by burning them off the filter. Particles, much larger than normally found in diesel engine exhaust gases, can be removed by other means than filtration.

WO99/56854 discloses a known method and device for separating solid particles from a flow of hot gas by utilizing water that condensates around the solid particles. The particles covered by water are then separated from the flow of the hot gas.

US2008/0250933 discloses a centrifugal wet type air cleaner. The air cleaner utilizes a labyrinth effect on the basis of spiral grooves for generating vortex flow.

### Summary of invention

An object of the invention is to avoid the disadvantages of prior art and to achieve a method which provides for a sufficient particle size for removal and for removal of large numbers of particles normally contained in an exhaust gas flow. This object is attained by a method according to claim 1.

The basic idea of the invention is to introduce the exhaust gas flow from an internal combustion engine, e.g. a diesel engine, into an exhaust gas particle cleaning device in which water supersaturation is present, whereby particles are grown to a larger size for removal. The exhaust gas particle cleaning device is provided with a higher temperature section and with a lower temperature section causing particle growth at the lower temperature section. The grown particles can then be removed from the exhaust gas particle cleaning device.

In order to achieve a given particle growth it is advantageous that the residence time of the exhaust gas in the exhaust gas particle cleaning device is kept sufficiently long.

The advantageous features of the method according to the present invention are given in claims 2 - 9. The main and advantageous features of the arrangement according to the present invention are given in claims 11-13.

### Brief description of drawings

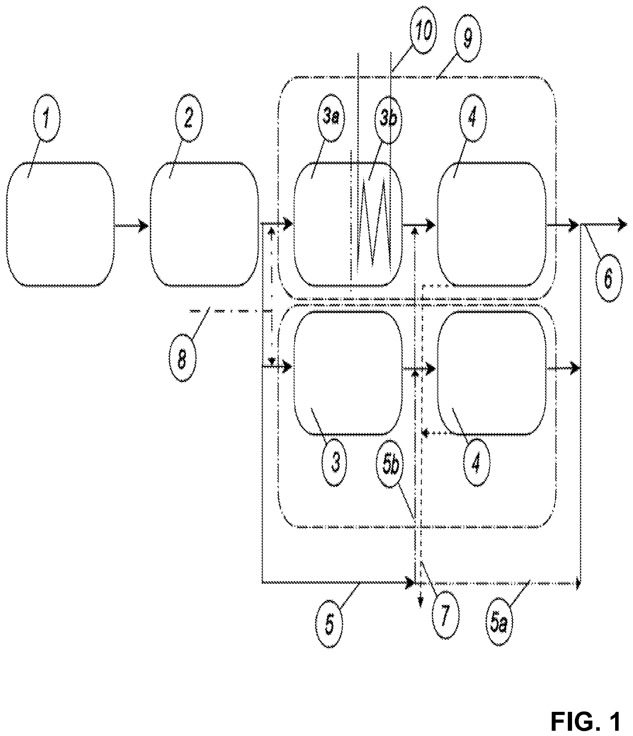

In the following the invention will be described, by way of example only, with reference to the accompanying drawings, in which
Figures 1-4 illustrates different embodiments of the arrangement according to the present invention.

### Detailed description

According to the present invention, as shown in Figures 1-3, an exhaust gas flow from an internal combustion engine 1, e.g. a diesel engine, is led to an exhaust gas particle cleaning device 9. Advantageously the exhaust gas flow is firstly introduced into a catalyst device 2, since the catalyst device generally requires a higher temperature.

In the exhaust gas particle cleaning device supersaturation is achieved by means of changes in temperature. This is done by providing the exhaust gas particle cleaning device with a higher temperature section and a lower temperature section causing particle growth at the lower temperature section. Difference between lower temperature and higher temperature may in theory be 1 - 50°C. In practice the difference of 3 - 7 °C might be sufficient for desired particle growth at the lower temperature section. Maximum value for higher temperature is about 70°C in order to obtain saturation phenomenom in the exhaust gas. Heat for the higher temperature section may be derived from the exhaust gas or from an external source. The lower temperature can be achieved by a cooler 10 or by adiabatic expansion. The particles can be grown to different sizes for efficient removal.

Exhaust gas particles from diesel engines are composed of solid particles and volatile compounds. The solid particles are composed of carbon and ash components of fuel and lube oil. The volatile compounds generally consist of some unburned fuel, lube oil and sulphuric acid. In order to reach high efficiency in particle removal, both the solid particles and the volatile compounds have to be removed.

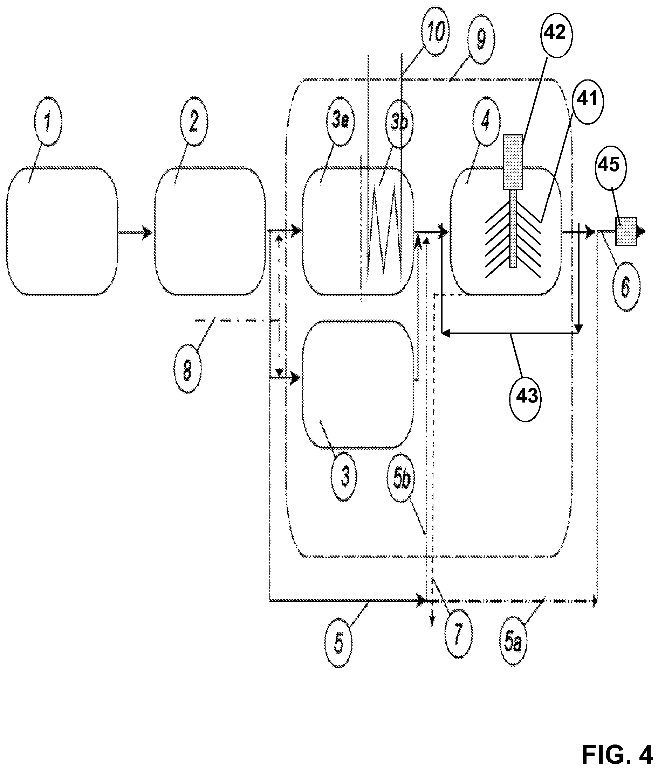

The exhaust gas particle cleaning device 9 advantageously comprises two parts, a first part 3 for particle growth and a second part 4 for particle removal. In this way the first part 3 for particle growth can be provided with the higher temperature section 3a and the lower temperature section 3b. The second part 4 can advantageously be a centrifugal mist separator. The principle of the centrifugal mist separator is illustrated in figure 4.

The first part 3 for particle growth is arranged before, i.e. upstream of the second part 4 for particle growth in the direction of the exhaust gas flow. The advantage of having a first part 3 for particle growth and separate second part 4 for particle removal allows for adapting the second part 4 for particle removal to prevailing particle size, i.e. the particle size achieved in the first part. The exhaust gas flow is firstly introduced into the first part 3 and then further led to the second part 4.

In such a two-part exhaust gas particle cleaning device, supersaturation is maintained in the first part 3 for particle growth of the exhaust gas cleaning device. Line 8 indicates a water supply or water vapour supply to the first part 3. The water vapour is brought to supersaturation by changes in temperature, whereby particle growth commences in the first part 3.

Preferably all particles are grown to a given desired particle size. Particles can also be grown to different sizes. In order to initiate required particle growth there is sufficiently long residence time of the exhaust gas in the exhaust gas particle cleaning device, i.e. in the first part 3 of a two-part exhaust gas particle cleaning device. Consequently, a desired given particle growth can be achieved by keeping the residence time long enough. Residence time of the exhaust gas in the exhaust gas particle cleaning device 9 can be adjusted by changing the flow rate in the first part 3. This can be achieved by guiding portion of the exhaust gas pass the first part 3 and/or by increasing the number of first part 3 units.

Grown particles can also be mixed with un-grown particles in order to enhance coagulation and consequently to provide for optimal removal. Optimal removal is achieved by matching particle growth in the first part 3 to particle removal efficiency in the second part 4. Particles of a size smaller than optimal or adequate removal capability of the second part 4 are grown in first part 3. Smaller particles are grown faster than larger ones in water supersaturation that is provided in the exhaust gas particle cleaning device, Therefore it is possible to increase the amount of particles having the size within the range removal capability of the second part 4. Preferably the amount of particles having the size of 0,1 - 1,0 µm is increased in the first part 3 and more preferably the amount of particles having the size of 0,3 - 0,8 µm is increased in the first part 3. This has an advantage in that devices for the second part 4 for removal can be selected more advantageously in view of cost, size, availability etc.

Depending on the degree of particle cleaning requirement the number of exhaust gas particle cleaning devices 9 as well as first parts 3 and second parts 4 may vary. They can e.g. be arranged in parallel, whereby an exhaust gas flow or a part of an exhaust gas flow can be introduced to the/each exhaust gas particle cleaning device 9 in order to achieve a required degree of particle cleaning, i.e. in order to achieve an appropriate emission level. The cleaned exhaust gas flow or parts of the cleaned exhaust gas flows can be combined with each other, or even with an un-cleaned exhaust gas flow, depending on the desired emission level.

In the following some examples of the arrangement according to the present invention will be discussed more in detail. Clearly, other combinations of the different components, i.e. the internal combustion engines, catalyst devices, exhaust gas particle cleaning devices, first parts and second parts, as well as exhaust gas flow patterns may vary.

In Figure 1 the exhaust gas from an internal combustion engine 1 is firstly led to a catalyst device 2 and then to the first part 3 and subsequently to the second part 4 of the exhaust gas particle cleaning device. Line 5 indicates a by-pass flow, with respect to the exhaust gas particle cleaning device, of the exhaust gas flow. In this embodiment there are two first parts 3 and two second parts 4. Portion of the exhaust gas flow is arranged to by-pass the first part 3. Particles that are grown in the first part 3 are mixed with un-grown particles after the second part 4 or before the second part 4 as indicated with reference numbers 5a and 5b, respectively. Broken line 7 from the second part 4 indicates the removal of water including extracted particles. Line 6 indicates the final exhaust gas flow that has been cleaned, and which also may be combined with the by-pass flow 5.

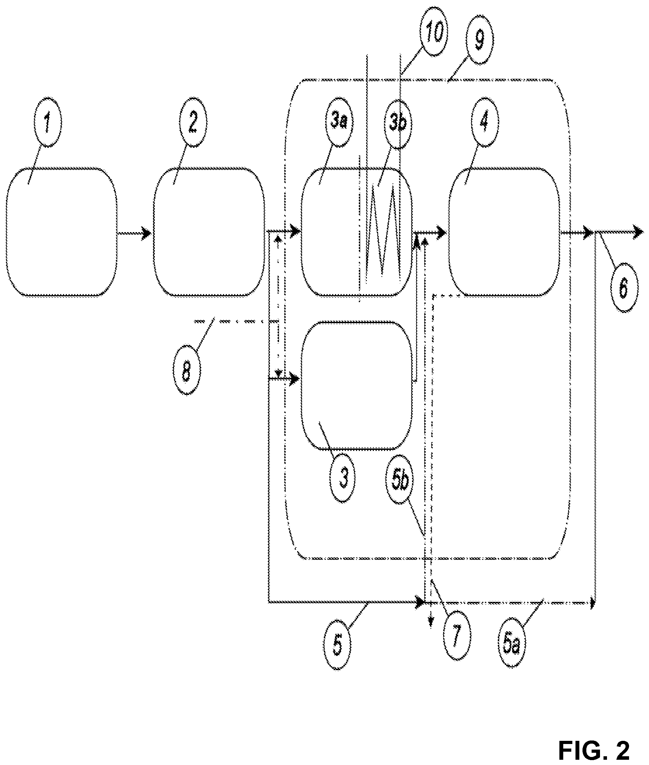

In Figure 2 the exhaust gas from an internal combustion engine 1 is firstly led to a catalyst device 2 and then to the first part 3 and subsequently to the second part 4 of the exhaust gas particle cleaning device. Line 5 indicates a by-pass flow, with respect to the exhaust gas particle cleaning device, of the exhaust gas flow. In this embodiment there are two first parts 3 and one second part 4, whereby an arrow line indicates that the exhaust gas from the second first part 3 is led to said one second part 4. Portion of the exhaust gas flow is arranged to by-pass the first part 3. Particles that are grown in the first part 3 are mixed with un-grown particles after the second part 4 or before the second part 4 as indicated with reference numbers 5a and 5b, respectively. Broken line 7 from the second part 4 indicates the removal of water including extracted particles. Line 6 indicates the final exhaust gas flow that has been cleaned, and which also may be combined with the by-pass flow 5.

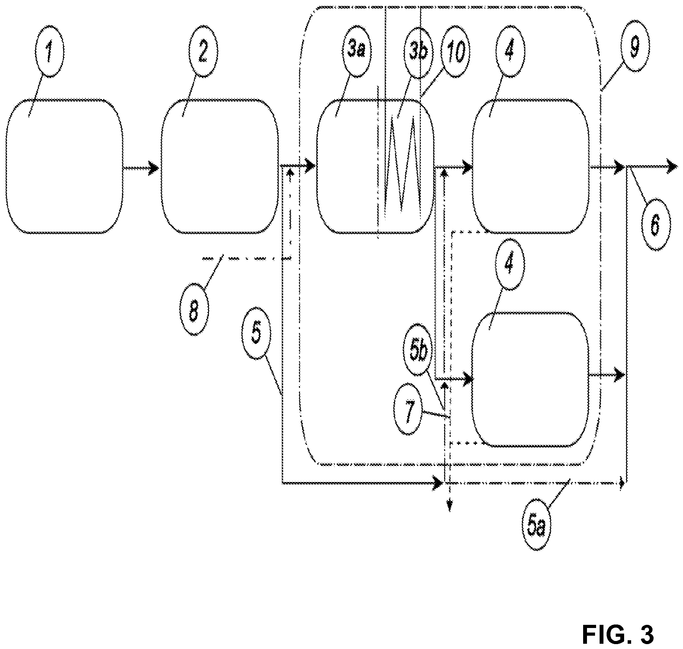

In Figure 3 the exhaust gas from an internal combustion engine 1 is firstly led to a catalyst device 2 and then to the first part 3 and subsequently to the second part 4 of the exhaust gas particle cleaning device. Line 5 indicates a by-pass flow, with respect to the exhaust gas particle cleaning device, of the exhaust gas flow. In this embodiment there is one first part 3 and two second parts 4, whereby an arrow line indicates that the exhaust gas from said one first part 3 is also led to the other second part 4. Portion of the exhaust gas flow is arranged to by-pass the first part 3. Particles that are grown in the first part 3 are mixed with un-grown particles after the second part 4 or before the second part 4 as indicated with reference numbers 5a and 5b, respectively. Broken line 7 from the second part 4 indicates the removal of water including extracted particles. Line 6 indicates the final exhaust gas flow that has been cleaned, and which also may be combined with the by-pass flow 5a.

In Figure 4 the principle of the centrifugal mist separator 4 is illustrated. The centrifugal mist separator 4 comprises a motor 42 which is arranged to rotate a disk stack 41, i.e. rotatable exhaust guiding part. Exhaust gas is guided to centre of the disk stack 41 and exits between disks of the disk stack 41. Speed of the exhaust gas flow is increased by rotating a disk stack 41 in the centrifugal mist separator.

Another alternative is centrifugal mist separator where a motor which is arranged to rotate a rotatable exhaust guiding part comprising two co-axial pipes. Exhaust gas is guided between pipes. At least one of the pipes is rotated such that centrifugal forces are applied by a motor.

Residence time of the exhaust gas in the exhaust gas particle cleaning device 9 can therefore also be adjusted by speed of the motor of the centrifugal mist separator 4. The arrangement further comprises a return line 43 from location after the centrifugal into location between the lower temperature section 3b and the centrifugal mist separator 4. The return line 43 allows recirculation of the exhaust gas from location after the centrifugal into location between the lower temperature section 3b and back to the centrifugal mist separator 4.

The arrangement further comprises device for exhaust gas measurement 45. The speed of the motor 42 of the centrifugal mist separator 4 can be partly or fully controlled based on this exhaust gas measurement 45.

Clearly also a one-part exhaust gas particle cleaning device can be used.

The description is intended to clarify the basic idea of the invention. The invention may vary in detail within the scope of the ensuing claims.

## Claims

1. Method for removing particles from exhaust gas from an internal combustion engine (1), in which method an exhaust gas flow from an internal combustion engine is led to exhaust gas particle cleaning device (9), providing water supersaturation in the exhaust gas particle cleaning device, the exhaust gas flow is introduced into the exhaust gas particle cleaning device provided with a higher temperature section (3a) and a lower temperature section (3b) causing particle growth at the lower temperature section, **characterised in that** grown particles are removed from the exhaust gas flow in a centrifugal mist separator (4), and **in that** residence time of the exhaust gas in the exhaust gas particle cleaning device (9) is adjusted by controlling the speed of a motor (42) of the centrifugal mist separator (4).

2. Method according to claim 1, **characterised in that** speed of the exhaust gas flow is increased by rotating a disk stack (41) in the centrifugal mist separator (4) with a motor (42).

3. Method according to claim 1 or 2, **characterised in that** portion of the exhaust gas is recirculated from location after the centrifugal into location between the lower temperature section (3b) and the centrifugal mist separator (4).

4. Method according to any previous claim, **characterised in that** residence time of the exhaust gas in the exhaust gas particle cleaning device (9) is adjusted by guiding portion of the exhaust gas to pass the higher temperature section (3a) and the lower temperature section (3b)

5. Method according to any previous claim, **characterised in that** method further comprises exhaust gas measurement and speed of the motor (42) of the centrifugal mist separator (4) is controlled based on this exhaust gas measurement (45).

6. Method according to claim 1, **characterised in that** them method employs an exhaust gas particle cleaning device with at least one first part (3) for particle growth, in which the particles are grown, and at least one second part (4) for particle removal, from which the grown particles are removed, and **in that** the exhaust gas flow is introduced into the at least one first part (3) and subsequently led to the at least one second part (4).

7. Method according to any previous claim, **characterised in that** amount of particles having the size of 0,1 - 1,0 µm is increased in the first part (3).

8. Method according to any previous claim 1 - 6, **characterised in that** amount of particles having the size of 0,3 - 0,8 µm is increased in the first part (3).

9. Method according to any previous claim, **characterised in that** the exhaust gas flow is firstly introduced into a catalyst device (2).

10. Arrangement for removing particles from exhaust gas from an exhaust gas flow of an internal combustion engine (1),according to the method of claim 1, which arrangement comprises at least one first part provided with a higher temperature section (3a) and a lower temperature section (3b) causing particle growth at the lower temperature section for particle growth and at least one second part for particle removal **characterised in that** the second part for particle removal is a centrifugal mist separator (4), and the arrangement further comprises device for exhaust gas measurement (45) and the centrifugal mist separator (4) comprises a motor (42), speed of the motor (42) of the centrifugal mist separator (4) is controllable based on this exhaust gas measurement (45).

11. Arrangement according to claim 10 **characterised in that** the motor (42) is arranged to rotate a disk stack (41).

12. Arrangement according to claim 10 or 11, **characterised in that** the at least one first part (3) is arranged before the centrifugal mist separator (4) in the direction of the exhaust gas flow.

13. Arrangement according to claims 10 or 11, **characterised in that** a catalyst device (2) is arranged before the at least one first part (3).

## Patentansprüche

1. Verfahren zum Entfernen von Partikeln aus einem Abgas einer Brennkraftmaschine (1), wobei in dem Verfahren eine Abgasströmung einer Brennkraftmaschine zu einer Reinigungsvorrichtung (9) für Abgaspartikel geführt wird, wobei eine Wasserübersättigung in der Reinigungsvorrichtung für Abgaspartikel bereitgestellt wird, wobei die Abgasströmung in die Reinigungsvorrichtung für Abgaspartikel, die mit einem Abschnitt (3a) einer höheren Temperatur und einem Abschnitt (3b) einer niedrigeren Temperatur versehen ist, eingeführt wird, wobei in dem Abschnitt einer niedrigeren Temperatur ein Partikelwachstum veranlasst wird, **dadurch gekennzeichnet, dass** gewachsene Partikel aus der Abgasströmung in einem Zentrifugaltröpfchenabscheider (4) entfernt werden, und dass
die Verweilzeit des Abgases in der Reinigungsvorrichtung (9) für Abgaspartikel eingestellt wird, indem die Geschwindigkeit eines Motors (42) des Zentrifugaltröpfchenabscheiders (4) gesteuert wird.

2. Verfahren nach Anspruch 1, **dadurch gekennzeichnet, dass** die Geschwindigkeit der Abgasströmung erhöht wird, indem in dem Zentrifugaltröpfchenabscheider (4) ein Lamellenstapel (41) mit einem Motor (42) gedreht wird.

3. Verfahren nach Anspruch 1 oder 2, **dadurch gekennzeichnet, dass** ein Abschnitt des Abgases von einem Ort nach der Zentrifuge zu einem Ort zwischen dem Abschnitt (3b) einer niedrigeren Temperatur und dem Zentrifugaltröpfchenabscheider (4) rezirkuliert.

4. Verfahren nach einem vorhergehenden Anspruch, **dadurch gekennzeichnet, dass** die Verweilzeit des Abgases in der Reinigungsvorrichtung (9) für Abgaspartikel eingestellt wird, indem ein Abschnitt des Abgases geführt wird, um es durch den Abschnitt (3a) einer höheren Temperatur und durch den Abschnitt (3b) einer niedrigeren Temperatur (3b) hindurchzulassen.

5. Verfahren nach einem vorhergehenden Anspruch, **dadurch gekennzeichnet, dass** das Verfahren ferner eine Abgasmessung umfasst, und dass die Geschwindigkeit des Motors (42) des Zentrifugaltröpfchenabscheiders (4) auf der Grundlage dieser Abgasmessung (45) gesteuert wird.

6. Verfahren nach Anspruch 1, **dadurch gekennzeichnet, dass** das Verfahren eine Reinigungsvorrichtung für Abgaspartikel mit mindestens einem ersten Teil (3) für das Partikelwachstum, in dem die Partikel wachsen, und mit mindestens einem zweiten Teil (4) für die Partikelentfernung, aus dem die gewachsenen Partikel entfernt werden, einsetzt, und dass die Abgasströmung in den mindestens einen ersten Teil (3) eingeführt wird und anschließend zu dem mindestens einen zweiten Teil (4) geführt wird.

7. Verfahren nach einem vorhergehenden Anspruch, **dadurch gekennzeichnet, dass** die Menge an Partikel, die die Größe von 0,1 - 1,0 µm aufweisen, in dem ersten Teil (3) erhöht wird.

8. Verfahren nach einem vorhergehenden Anspruch, **dadurch gekennzeichnet, dass** die Menge an Partikel, die die Größe von 0,3 - 0,8 µm aufweisen, in dem ersten Teil (3) erhöht wird.

9. Verfahren nach einem vorhergehenden Anspruch, **dadurch gekennzeichnet, dass** die Abgasströmung zuerst in eine Katalysatorvorrichtung (2) eingeführt wird.

10. Anordnung zum Entfernen von Partikeln aus einem Abgas von einer Abgasströmung einer Brennkraftmaschine (1) gemäß dem Verfahren nach Anspruch 1, wobei die Anordnung mindestens einen ersten Teil umfasst, der mit einem Abschnitt (3a) einer höheren Temperatur und einem Abschnitt (3b) einer niedrigeren Temperatur versehen ist, wobei an dem Abschnitt der niedrigeren Temperatur für ein Partikelwachstum ein Partikelwachstum veranlasst wird, und wobei die Anordnung mindestens einen zweiten Teil für die Partikelentfernung umfasst, **dadurch gekennzeichnet, dass** der zweite Teil für die Partikelentfernung ein Zentrifugaltröpfchenabscheider (4) ist, und dass die Anordnung ferner eine Vorrichtung für eine Abgasmessung (45) umfasst, und dass der Zentrifugaltröpfchenabscheider (4) einen Motor (42) umfasst, wobei der Motor (42) des Zentrifugaltröpfchenabscheiders (4) auf der Grundlage dieser Abgasmessung (45) steuerbar ist.

11. Anordnung nach Anspruch 10, **dadurch gekennzeichnet, dass** der Motor (42) angeordnet ist, um einen Lamellenstapel (41) zu drehen.

12. Anordnung nach Anspruch 10 oder 11, **dadurch gekennzeichnet, dass** der mindestens eine erste Teil (3) vor dem Zentrifugaltröpfchenabscheider (4) in der Richtung der Abgasströmung angeordnet ist.

13. Anordnung nach Anspruch 10 oder 11, **dadurch gekennzeichnet, dass** eine Katalysatorvorrichtung (2) vor dem mindestens einen ersten Teil (3) angeordnet ist.

## Revendications

1. Procédé pour l'élimination de particules à partir d'un gaz d'échappement venant d'un moteur à combustion interne (1), dans lequel un flux de gaz d'échappement venant d'un moteur à combustion interne est guidé vers un dispositif de nettoyage de particules dans un gaz d'échappement (9), apportant une sursaturation d'eau dans le dispositif de nettoyage de particules dans un gaz d'échappement, le flux de gaz d'échappement est introduit dans le dispositif de nettoyage de particules dans un gaz d'échappement doté d'une section haute température (3a) et d'une section basse température (3b) générant une augmentation des particules dans la section basse température, **caractérisé en ce que** des particules de plus grande taille sont éliminées du flux de gaz d'échappement dans un séparateur de brouillard centrifuge (4), et **en ce que** le temps de séjour du gaz d'échappement dans le dispositif de nettoyage de particules dans un gaz d'échappement (9) est réglé en contrôlant la vitesse d'un moteur (42) du séparateur de brouillard centrifuge (4).

2. Procédé selon la revendication 1, **caractérisé en ce que** la vitesse du flux de gaz d'échappement est augmentée par la rotation d'une pile de disques (41) dans le séparateur de brouillard centrifuge (4) avec un moteur (42).

3. Procédé selon la revendication 1 ou 2, **caractérisé en ce qu'**une partie du gaz d'échappement est recyclée à partir d'un endroit en aval de la force centrifuge vers un endroit entre la section basse température (3b) et le séparateur de brouillard centrifuge (4).

4. Procédé selon l'une quelconque des revendications précédentes, **caractérisé en ce que** le temps de séjour du gaz d'échappement dans le dispositif de nettoyage de particules dans un gaz d'échappement (9) est réglé en guidant une partie du gaz d'échappement à travers la section haute température (3a) et la section basse température (3b).

5. Procédé selon l'une quelconque des revendications précédentes, **caractérisé en ce que** le procédé comprend en outre la mesure du gaz d'échappement, et la vitesse du moteur (42) du séparateur de brouillard centrifuge (4) est contrôlée sur la base de cette mesure de gaz d'échappement (45).

6. Procédé selon la revendication 1, **caractérisé en ce que** le procédé utilise un dispositif de nettoyage de particules dans un gaz d'échappement comprenant au moins une première partie (3) destinée à l'augmentation des particules, dans laquelle les particules sont augmentées, et au moins une deuxième partie (4) destinée à l'élimination des particules, à partir de laquelle les particules de plus grande taille sont éliminées, et **en ce que** le flux de gaz d'échappement est introduit dans l'au moins une première partie (3) puis guidées vers l'au moins une deuxième partie (4).

7. Procédé selon l'une quelconque des revendications précédentes, **caractérisé en ce que** la quantité de particules présentant une taille de 0,1 à 1,0 µm est augmentée dans la première partie.

8. Procédé selon l'une quelconque des revendications 1 à 6, **caractérisé en ce que** la quantité de particules présentant une taille de 0,3 à 0,8 µm est augmentée dans la première partie (3).

9. Procédé selon l'une quelconque des revendications précédentes, **caractérisé en ce que** le flux de gaz d'échappement est tout d'abord introduit dans un dispositif catalyseur (2).

10. Système pour l'élimination de particules à partir d'un gaz d'échappement d'un flux de gaz d'échappement venant d'un moteur à combustion interne (1), selon le procédé de la revendication 1, ledit système comprenant au moins une première partie dotée d'une section haute température (3a) et d'une section basse température (3b) générant une augmentation des particules dans la section basse température pour l'augmentation des particules, et au moins une deuxième partie destinée à l'élimination des particules, **caractérisé en ce que** la deuxième partie destinée à l'élimination des particules est un séparateur de brouillard centrifuge (4), et le système comprend en outre un dispositif de mesure du gaz d'échappement (45), et le séparateur de brouillard centrifuge (4) comprend un moteur (42), la vitesse du moteur (42) du séparateur de brouillard centrifuge (4) pouvant être contrôlée sur la base de cette mesure de gaz d'échappement (45).

11. Système selon la revendication 10, **caractérisé en ce que** le moteur (42) est arrangé pour faire tourner une pile de disques (41).

12. Système selon la revendication 10 ou 11, **caractérisé en ce que** l'au moins une première partie (3) est disposée en amont du séparateur de brouillard centrifuge (4) dans la direction du flux de gaz d'échappement.

13. Système selon la revendication 10 ou 11, **caractérisé en ce qu'**un dispositif catalyseur (2) est disposé en amont de l'au moins une première partie (3).
